# EUROPEAN PATENT SPECIFICATION

(11) **EP 1 854 814 B1**
(45) Date of publication and mention of the grant of the patent: **06.04.2011**
(21) Application number: 06714573.0
(22) Date of filing: 24.02.2006
(51) Int. Cl.: C08F 8/04, C08F 12/12, C08F 12/14, C08F 12/32, C08F 220/18, C08G 83/00, C08F 8/00

(54) **HYPER-BRANCHED POLYMER AND PROCESS FOR PRODUCTION OF THE SAME**
HYPERVERZWEIGTES POLYMER UND HERSTELLUNGSVERFAHREN DAFÜR
POLYMERE HYPER-RAMIFIE ET PROCEDE POUR LA PRODUCTION DE CELUI-CI

(30) Priority: 03.03.2005 JP 2005059184
(43) Date of publication of application: 14.11.2007
(73) Proprietor: TOKYO INSTITUTE OF TECHNOLOGY, Tokyo 152-8550 (JP); Nissan Chemical Industries, Ltd., Chiyoda-ku, Tokyo 101-0054 (JP)
(72) Inventor: ISHIZU, Koji, Tokyo, 1528550 (JP); OZAWA, Masaaki c/o Nissan Chemical Industries,, Chiba, 2740069 (JP); TANAKA, Akihiro c/o Nissan Chemical Industries,, Chiba, 2740069 (JP); TAKEMOTO, Hiroki c/o Nissan Chemical Industries,, Chiba, 2740069 (JP); YASUI, Kei c/o Nissan Chemical Industries, Ltd., Chiba, 2740069 (JP)
(74) Representative: HOFFMANN EITLE
(86) International application number: PCT/JP2006/303434
(87) International publication number: WO 2006/093050

(56) References cited:
- EP-A1- 1 860 504
- EP-A1- 1 950 250
- JP-A- 2004 256 563
- TOMITA YASUO; FURUSHIMA KOUJI; OCHI KOICHIRO; ISHIZU KOJI; TANAKA AKIHIRO; OZAWA MASAAKI; HIDAKA MOTOHIKO; CHIKAMA KATSUMI: "Organic nanoparticle (hyperbranched polymer)-dispersed photopolymers for volume holographic storage" APPLIED PHYSICS LETTERS, AIP, AMERICAN INSTITUTE OF PHYSICS, MELVILLE, NY, US, vol. 88, no. 7, 13 February 2006 (2006-02-13), pages 071103-1-071103-3, XP012082816 ISSN: 0003-6951
- OTSU T; MATSUNAGA T; DOI T; MATSUMOTO A: "Features of living radical polymerization of vinyl monomers in homogeneous system using N-N-diethyldithiocarbamate derivatives as photoiniferters" EUROPEAN POLYMER JOURNAL, PERGAMON PRESS LTD. OXFORD, GB, vol. 31, no. 1, 1 January 1997 (1997-01-01), pages 67-78, XP004066872 ISSN: 0014-3057
- ISHIZU K. ET AL.: 'Synthesis of hyperbranched polymers by self-addition free radical vinyl polymerization of photofunctional styrene' MACROMOLECULAR RAPID COMMUNICATIONS vol. 21, no. 10, 2000, pages 665 - 668, XP003001246
- ISHIZU K. ET AL.: 'Synthesis and characterization of hyperbranched poly(ethyl methacrylate) by quasi-living radical polymerization of photo functional inimer' POLYMER INTERNATIONAL vol. 51, no. 5, 2002, pages 424 - 428, XP003001247

## Description

### Technical Field

The present invention relates to a novel hyperbranched polymer and production method thereof. The hyperbranched polymer according to the present invention has such characteristics as being optically and thermally stable and is preferably utilized, for example, as paints, inks, adhesives, resin fillers, various molding materials, nanometer pore forming agents, chemical and mechanical abrasives, supporting materials for functional substances, nanocapsules, photonic crystals, resist materials, optical materials, electronic materials, information recording materials, printing materials, battery materials, medical materials and magnetic materials.

### Background Art

Hyperbranched polymers are classified as dendritic polymers together with dendrimers. While related-art polymers generally have a string form, these dendritic polymers have a highly branched structure. Accordingly, expectations lie in practical application of such various characteristics thereof as having a specific structure, a nanometer size and surfaces capable of retaining many functional groups; being rendered having a low viscosity compared to linear polymers; exhibiting a behavior like fine particles with little entanglement of molecules; and capable of becoming amorphous with their solubility in a solvent controllable.
Particularly, it is the most remarkable characteristic of dentritic polymers to have a large number of terminal groups. The more the molecular weight is, the more the number of branched chains increases, so that the absolute number of terminal groups becomes larger as the molecular weight of dendritic polymers increases. In such a dendritic polymer having a large number of terminal groups, intermolecular interactions depend largely on the types of the terminal groups, resulting in variations in its glass transition temperature, solubility and thin film forming properties. Accordingly, such a dendritic polymer has characteristics which no general linear polymer has. Further, to such a dendritic polymer, reactive functional group can be added as terminal groups with an extremely high density, so that its applications as, for example, a high sensitive scavenger for functional substances, a high sensitive multifunctional crosslinking agent, a dispersant for metals or metal oxides and a coating agent are expected.

As a point at which the hyperbranched polymer is superior to the dendrimer, there can be mentioned a simplicity to be synthesized which is advantageous particularly in an industrial production. Generally, while the dendrimer is synthesized by repeating a protection and a deprotection, the hyperbranched polymer is synthesized by an one-stage polymerization of a so-called ABₓ type monomer having in one molecule thereof, three or more substituents of two types. A method for synthesizing a hyperbranched polymer by a living radical polymerization of a compound having a vinyl group while having a photopolymerization initiating ability, is known. For example, a synthesis method of a hyperbranched polymer by a photo-polymerization of a styrene compound having a dithiocarbamate group (see Non-Patent Documents 1, 2 and 3) and a synthesis method of a hyperbranched polymer having a dithiocarbamate group by a photopolymerization of an acryl compound having a dithiocarbamate group (see Non-Patent Documents 4, 5 and 6) are known. However, since these hyperbranched polymers have in the molecule thereof, a dithiocarbamate group having a photopolymerization initiating ability, they remain in a living state relative to a light and do not have any high thermal stability. It has been desired that an optically and thermally stable hyperbranched polymer having no dithiocarbamate group is developed. Though while a hyperbranched polymer of phenol derivatives is known (see Patent Document 1), an organic synthetic reaction in which a dithiocarbamate group is converted to a thiol group is reported (see Non-Patent Document 7), there is no report with respect to the stabilization of a hyperbranched polymer having a dithiocarbamate group in a molecule thereof.
[Patent Document 1] Japanese Patent Application Publication No. JP-A-2000-344836
[Non-Patent Document 1] Koji Ishizu, Akihide Mori, Macromol. Rapid Commun. 21, 665-668 (2000)
[Non-Patent Document 2] Koji Ishizu, Akihide Mori, Polymer International 50, 906-910 (2001)
[Non-Patent Document 3] Koji Ishizu, Yoshihiro Ohta, Susumu Kawauchi, Macromolecules Vol. 35, No. 9, 3781-3784 (2002)

### AMENDED DESCRIPTION

[Non-Patent Document 4] Koji Ishizu, Takeshi Shibuya, Akihide Mori, Polymer International 51, 424-428 (2002)
[Non-Patent Document 5] Koji Ishizu, Takeshi Shibuya, Susumu Kawauchi, Macromolecules Vol. 36, No. 10, 3505-3510 (2003)
[Non-Patent Document 6] Koji Ishizu, Takeshi Shibuya, Jaebum Park, Satoshi Uchida, Polymer International 53, 259-265 (2004)
[Non-Patent Document 7] Bernhard F. Riefling, Tetrahedron Letters 26, 2063-2064 (1985)

JP-A-2004 256563 describes a method of producing a polybranched star polymer by a 1-stage process by simultaneously polymerizing a monomer for forming arms and a monomer for forming a polyfunctional core in one pot.

Y. Tomita et al. report on the use of a hyperbranched poly(ethyl methacrylate) and a hyperbranched polystyrene acting as mobile organic nanoparticles doped in methacrylate photopolymers for highly efficient volume holographic recording (Y. Tomita et al., APPLIED PHYSICS LETTERS, AIP, AMERICAN INSTITUTE OF PHYSICS, MELVILLE, NY, US, Vol. 88, No. 7, February 13, 2006 (2006-02-13), pages 071103-1-071103-3).

T. Otsu et al. report on living radical polymerization of vinyl monomers in homogenous system using N,N-diethyldithiocarbamate derivatives as photoiniferters. It is described that poly(vinyl chloride) and polystyrene modified with N-methyldithiocarbamate is cleaved by a nucleophile such as dialkylamine to give the corresponding polymeric thiol (OTSU T. et al. EUROPEAN POLYMER JOURNAL, PERGAMON PRESS LTD. OXFORD, GB, Vol. 31, No. 1, 1995, pages 67-78).

### Disclosure of Invention

### Problems to be solved by the Invention

It is an object of the present invention is to provide a novel hyperbranched polymer that is optically and thermally stable, and a production method thereof. Further, another object of the present invention is to provide a novel hyperbranched polymer having a thiol group at a molecular terminal thereof and a production method thereof.

### Means to solve the Problems

The present invention relates to the following aspects. According to a first aspect, a hyperbranched polymer represented by Formula (1): 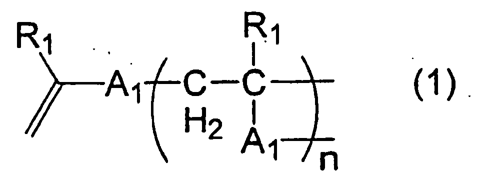 wherein R₁ represents a hydrogen atom or a methyl group; A₁ represents Formula (2) or Formula (3): 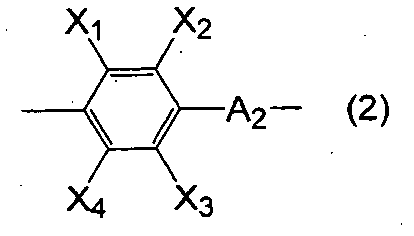 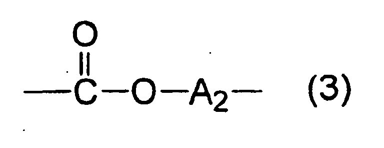 wherein A₂ represents a linear, branched or cyclic alkylene group having 1 to 30 carbon atoms, which may contain an ether bond or an ester bond; X₁, X₂, X₃ and X₄ individually represent a hydrogen atom, an alkyl group having 1 to 20 carbon atoms, an alkoxy group having 1 to 20 carbon atoms, a halogen group, a nitro group, a hydroxyl group, an amino group, a carboxyl group or a cyano group; and n is the number of repeating units which is an integer of 2 to 100000,
and having a hydrogen atom or a thiol group at a molecular terminal thereof. According to a second aspect, the hyperbranched polymer according to the first aspect, wherein the A₁ is a structure represented by Formula (4):

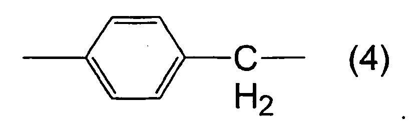

According to a third aspect, the hyperbranched polymer according to the first aspect, wherein the A₁ is a structure represented by Formula (5): 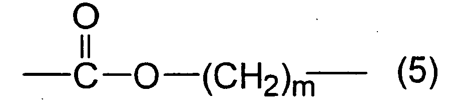 wherein m represents an integer of 2 to 10.

According to a fourth aspect, the hyperbranched polymer according to the first aspect, wherein a weight average molecular weight is 500 to 5000000, as measured by a gel permeation chromatography in a converted molecular weight as polystyrene. According to a fifth aspect, a method of producing the hyperbranched polymer having a hydrogen atom at a molecular terminal thereof according to the first aspect comprising:
living-radical polymerizing a dithiocarbamate compound represented by Formula (6): 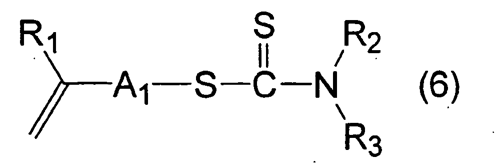 wherein R₁ and A₁ represent the same as defined above in Formula (1); R₂ and R₃ individually represent an alkyl group having 1 to 5 carbon atoms, a hydroxyalkyl group having 1 to 5 carbon atoms or an aryl alkyl group having 7 to 12 carbon atoms; and R₂ and R₃ may be bonded to each other to form a ring together with a nitrogen atom to obtain a hyperbranched polymer having a dithiocarbamate group at a molecular terminal thereof; and reducing the hyperbranched polymer.

According to a sixth aspect, the production method according to the fifth aspect, wherein the dithiocarbamate compound is N,N-diethyldithiocarbamylmethylstyrene or N,N-diethyldithiocarbamylethylmethacrylate.

According to a seventh aspect, the production method according to the fifth aspect, wherein the reduction is performed by irradiating a light in the presence of tributyltin hydride.

According to an eighth aspect, the production method according to the fifth aspect, wherein the reduction is performed by irradiating a light in the presence of tributyltin hydride in an organic solvent solution containing the hyperbranched polymer having a dithiocarbamate group at a molecular terminal thereof.

According to a ninth aspect, a method of producing the hyperbranched polymer having a thiol group at a molecular terminal thereof according to the first aspect comprising:
living-radical polymerizing the dithiocarbamate compound represented by Formula (6) to obtain a hyperbranched polymer having a dithiocarbamate group at a molecular terminal thereof; and
reacting the hyperbranched polymer having a dithiocarbamate group at a molecular terminal thereof with a thiolation converting agent.

According to a tenth aspect, the production method according to the ninth aspect, wherein the dithiocarbamate compound is N,N-diethyldithiocarbamylmethylstyrene or N,N-diethyldithiocarbamylethylmethacrylate.

According to an eleventh aspect, the production method of a hyperbranched polymer according to the ninth aspect comprising:
reacting a hyperbranched polymer having a dithiocarbamate group at a molecular terminal thereof in an organic solvent solution dissolving the same with a thiolation converting agent.

According to a twelfth aspect, the production method according to the ninth aspect, wherein as the thiolation converting agent, used is at least one selected from hydrazine, benzyl hydrazine, ammonia, sodium metal, sodium hydroxide, potassium hydroxide, lithium aluminum hydride, sodium boron hydride, hydrogen bromide, hydrochloric acid, trifluoroacetic acid and mercury diacetylate.

According to a thirteenth aspect, a thin film composed of the hyperbranched polymer according to the first aspect.

### Effects of the Invention

According to the present invention, an optically and thermally stable hyperbranched polymer having a hydrogen atom at a molecular terminal thereof can be obtained. Also, according to the method of the present invention, an optically and thermally stable hyperbranched polymer can be simply and effectively obtained. Further, according to the present invention, a hyperbranched polymer having a thiol group at a molecular terminal thereof can be obtained, which is expected for an application as, for example a high sensitive multifunctional crosslinking agent, a dispersant or coating agent for a metal. Also, according to the method of the present invention, a hyperbranched polymer having a thiol group at a molecular terminal thereof can be simply and effectively obtained.
Further, according to the present invention, an advantageous film composed of a hyperbranched polymer can be obtained.

### Best Modes for carrying out the Invention

The hyperbranched polymer of the present invention is a hyperbranched polymer having a structure represented by Formula (1) and having a hydrogen atom or a thiol group at a molecular terminal thereof. In Formula (1), R₁ represents a hydrogen atom or a methyl group. n is the number of repeating units which is an integer of 2 to 100000. A₁ represents a structure represented by Formula (2) or Formula (3).
In Formula (2) and Formula (3), A₂ represents a linear, branched or cyclic alkylene group having 1 to 30 carbon atoms, which may contain an ether bond or an ester bond; and X₁, X₂, X₃ and X₄ individually represent a hydrogen atom, an alkyl group having 1 to 20 carbon atoms, an alkoxy group having 1 to 20 carbon atoms, a halogen group, a nitro group, a hydroxyl group, an amino group, a carboxyl group or a cyano group.
Specific examples of the alkylene group include a linear alkylene, such as methylene, ethylene, n-propylene, n-butylene and n-hexylene; and a branched alkylene, such as isopropylene, isobutylene and 2-methylpropylene. Examples of the cyclic alkylene include an alicyclic aliphatic group having 3 to 30 carbon atoms and having a monocyclic, polycyclic or crosslinked cyclic structure. Specific examples thereof include groups having 4 or more carbon atoms and having a monocyclo, bicyclo, tricyclo, tetracyclo or pentacyclo structure. For example, structural examples (a) to (s) of the alicyclic part in the alicyclic aliphatic group are shown as follows. 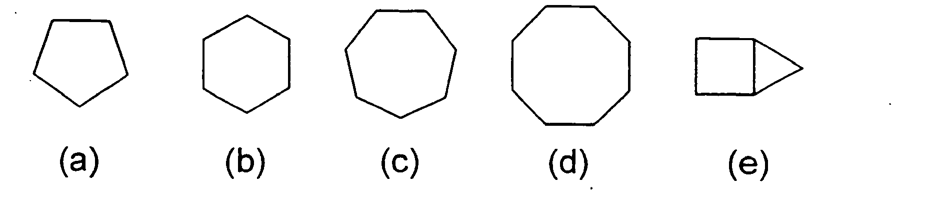 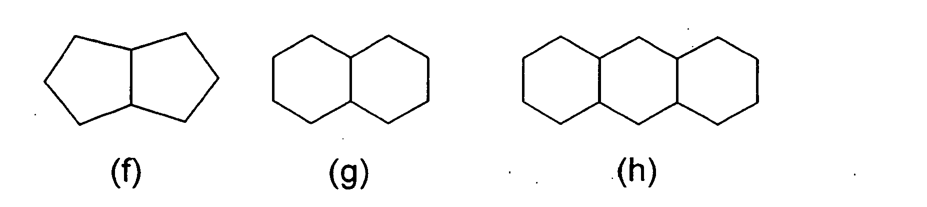 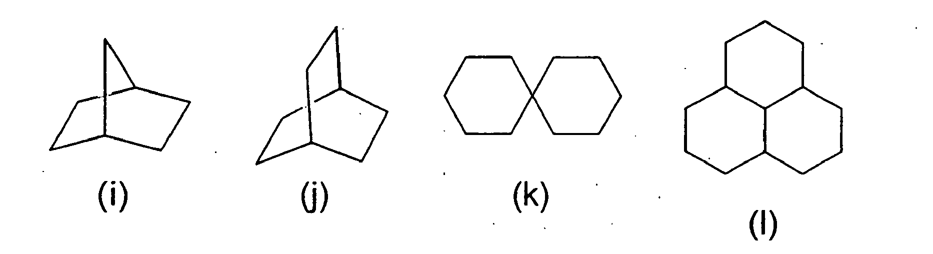 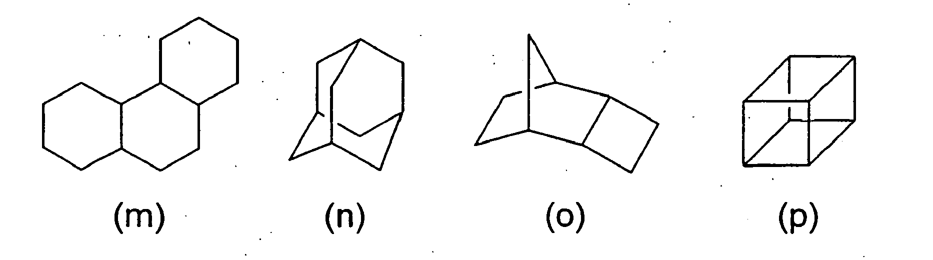 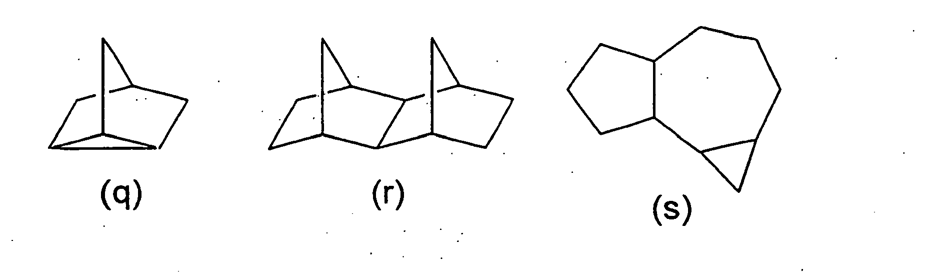 Examples of the alkyl group having 1 to 20 carbon atoms include a methyl group, an ethyl group, an isopropyl group, a cyclohexyl group and an n-pentyl group. Examples of the alkoxy group having 1 to 20 carbon atoms include a methoxy group, an ethoxy group, an isopropoxy group, a cyclohexyloxy group and an n-pentyloxy group. Examples of the halogen group include a fluoro group, a chloro group, a bromo group and an iodo group. Preferred examples of X₁, X₂, X₃ and X₄ include a hydrogen atom and an alkyl group having 1 to 20 carbon atoms.
As A₁ in Formula (1), a structure represented by Formula (4) or Formula (5) is preferred.
In Formula (5), m represents an integer of 2 to 10 and is preferably 2 or 3.

In the hyperbranched polymer of the present invention having a structure represented by Formula (1), to a structure of a polymerization initiation point part having a vinyl group represented by Formula (7), a repeating unit structure represented by Formula (8) is coupled. 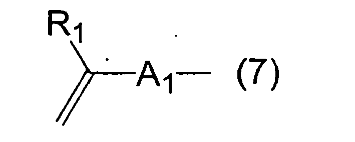 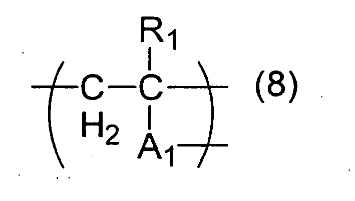 As a structure as an example in which a molecular terminal of the above coupled structure is a hydrogen atom and the number n of repeating units is 2, Formula (9) and Formula (10): 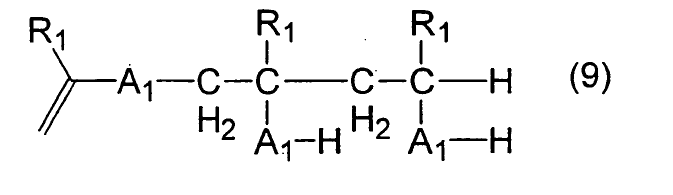 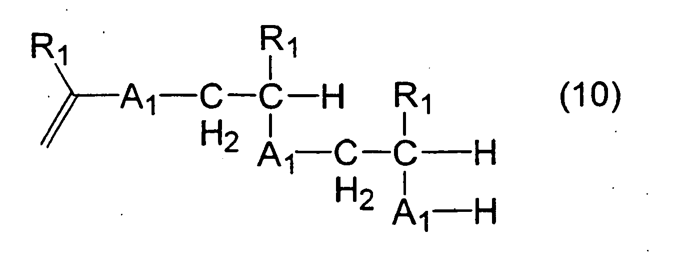 can be expected.
The hyperbranched polymer of the present invention contains both structures of Formulae (9) and (10). When the number n of repeating units is 3, one of two terminal hydrogen atoms in Formulae (9) and (10) is converted to Formula (8) and as the whole structure, Formulae (11) to (15) are expected. The hyperbranched polymer of the present invention contains any structure of Formulae (11) to (15). 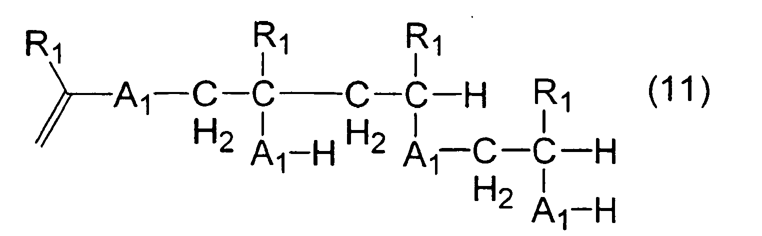 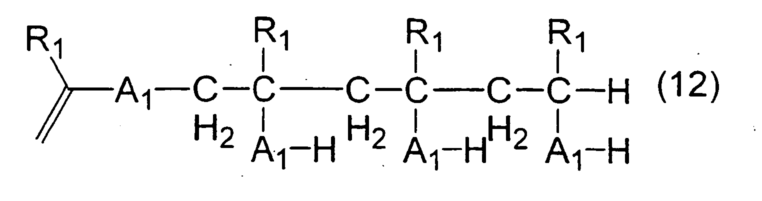 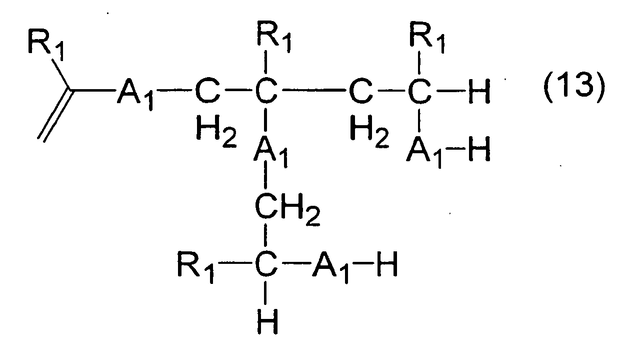 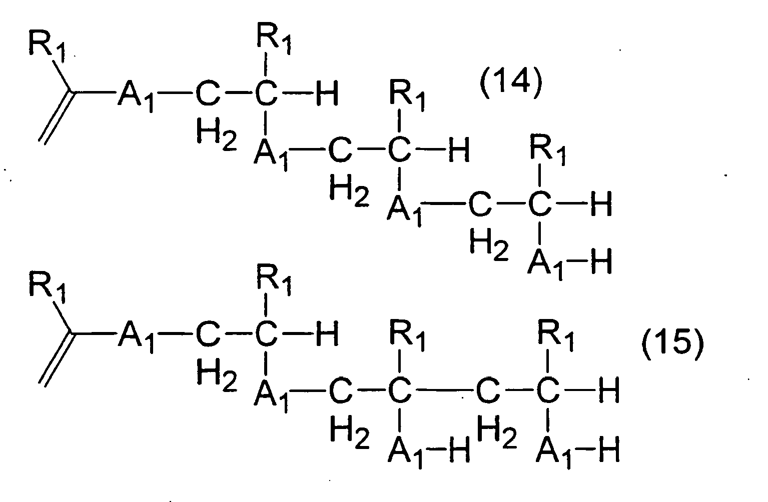 When the number n of repeating units is 4 or more, a further large number of structures can be expected. The hyperbranched polymer of the present invention contains any of such structures. In other words, the hyperbranched polymer having a structure represented by Formula (1) according to the present invention contains all of structures in which to the structure of the initiation point part represented by Formula (7), two or more of repeating units represented by Formula (8) are coupled. And there are a branched structure in which repeating units are bonded to each other regularly at three points and a linear structure in which repeating units are bonded to each other at two points, and the present invention contains the both structures. With respect to the hyperbranched polymer of the present invention, the repeating unit thereof may have a single type or two or more types. For example, when the hyperbranched polymer has two types of repeating units (that is, the polymer is a copolymer), the sequence of the copolymer may be any one of a random copolymer, an alternating copolymer and a block copolymer.
The hyperbranched polymer of the present invention has a weight average molecular weight Mw (measured by a gel permeation chromatography in a converted molecular weight as polystyrene) of 500 to 5000000, or 1000 to 1000000, or 2000 to 500000, or 3000 to 100000. The degree of dispersion which is a ratio of Mw (weight average molecular weight) / Mn (number average molecular weight) of the hyperbranched polymer is 1.0 to 7.0, or 1.1 to 6.0, or 1.2 to 5.0.

Next, the production method of the hyperbranched polymer represented by Formula (1) of the present invention is described.
The hyperbranched polymer of the present invention is produced either as a hyperbranched polymer having a hydrogen atom at a molecular terminal thereof by reducing a hyperbranched polymer having a dithiocarbamate group at a molecular terminal thereof obtained by living-radical polymerizing a dithiocarbamate compound represented by Formula (6), or as a hyperbranched polymer having a thiol group at a molecular terminal thereof by reacting the above hyperbranched polymer having a dithiocarbamate group at a molecular terminal thereof with a thiolation converting agent (means a compound capable of converting a dithiocarbamate group to a thiol group).
In Formula (6), R₁ and A₁ are the same as defined above, and R₂ and R₃ individually represent an alkyl group having 1 to 5 carbon atoms, a hydroxyalkyl group having 1 to 5 carbon atoms or an arylalkyl group having 7 to 12 carbon atoms. R₂ and R₃ may be bonded to each other to form together with a nitrogen atom, a ring.
Examples of the alkyl group having 1 to 5 carbon atoms include, a methyl group, an ethyl group, an isopropyl group, a t-butyl group, a cyclopentyl group an n-pentyl group. Examples of the hydroxyalkyl group having 1 to 5 carbon atoms include a hydroxymethyl group, a hydroxyethyl group and a hydroxypropyl group. Examples of the arylalkyl group having 7 to 12 carbon atoms include a benzyl group and a phenethyl group.
Examples of the ring formed with R₂ and R₃ which are bonded to each other and together with a nitrogen atom include a 4- to 8-membered ring; a ring containing 4 to 6 methylene groups in the ring; and a ring comprising an oxygen atom, a sulfur atom and 4 to 6 methylene groups in the ring. Specific examples of the ring formed with R₂ and R₃ which are bonded to each other and together with a nitrogen atom include a piperizine group, a pyrrolidine group, a morpholine group, a thiomorpholine group and a homopiperizine group.

The compound of Formula (6) can be easily obtained by a nucleophilic substitution reaction between a compound of Formula (16) and a compound of Formula (17). 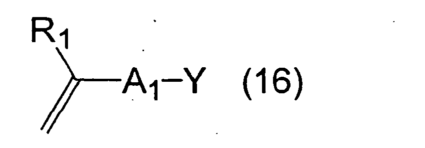 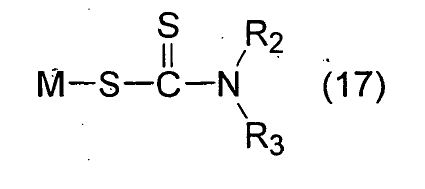 In Formula (16), Y represents a leaving group. Examples of the leaving group include a fluoro group, a chloro group, a bromo group, an iodo group, a mecyl group and a tocyl group. In Formula (17), M represents lithium, sodium or potassium.
The nucleophilic substitution reaction is usually performed preferably in an organic solvent capable of dissolving both the above two types of compounds. After the reaction, by a liquid separation treatment into water/nonaqueous organic solvent or by a recrystallization treatment, the compound of Formula (6) can be obtained in a high purity. Also, the compound of Formula (6) can be produced referring to a method described in "Macromol. Rapid Commun. 21, 665-668 (2000)" or in "Polymer International 51, 424-428 (2002)".
Specific examples of the compound of Formula (6) include N,N-diethyldithiocarbamylmethylstyrene and N,N-diethyldithiocarbamylethylmethacrylate.
Then, by living-radical polymerizing the dithiocarbamate compound represented by Formula (6), a hyperbranched polymer having a dithiocarbamate group at a molecular terminal thereof can be obtained. The living-radical polymerization of the compound of Formula (6) can be performed by a known polymerization type, such as a bulk polymerization, a solution polymerization, a suspension polymerization and an emulsion polymerization. The solution polymerization is preferred.
In the case of the solution polymerization, in a solvent capable of dissolving the compound of Formula (6), the polymerization reaction can be performed at any concentration of the compound of Formula (6). The concentration of the compound of Formula (6) may be any one. However, it is, for example 1 to 80 % by mass, or 2 to 70 % by mass, or 5 to 60 % by mass, or 30 to 50 % by mass. The solvent is not particularly limited so long as the solvent is a solvent capable of dissolving the compound of Formula (6). Examples of the solvent include aromatic hydrocarbons, such as benzene, toluene, xylene and ethylbenzene; ether compounds, such as tetrahydrofuran and diethyl ether; ketone compounds, such as acetone, methyl ethyl ketone, methyl isobutyl ketone and cyclohexanone; and aliphatic hydrocarbons, such as n-heptane, n-hexane and cyclohexane. These solvents may be used individually or in combination of two or more types thereof.

The living-radical polymerization of the compound of Formula (6) can be performed in a solvent by heating or irradiating a light, such as an UV ray. By irradiating a light, such as an UV ray, the polymerization is preferably performed. In the living-radical polymerization, it is necessary that before the initiation of the polymerization, oxygen in the reaction system is fully purged and the purge of the reaction system is preferably performed using an inert gas, such as nitrogen and argon. The polymerization time is, for example 0.1 to 100 hours, or 1 to 50 hours, or 3 to 30 hours. Usually, according to the time course of the polymerization, the conversion ratio of the monomer (the compound of Formula (6)) is elevated. The polymerization temperature is not particularly limited. However, it is, for example 0 to 200°C, or 10 to 150°C, or 20 to 100°C.
Also, the living-radical polymerization of the compound of Formula (6) can be performed referring to a method described in "Macromolecules Vol. 35, No. 9, 3781-3784 (2002)" or in "Macromolecules Vol. 36, No. 10, 3505-3510 (2002)".

By a living-radical polymerization of the dithiocarbamate compound represented by Formula (6), the hyperbranched polymer having a dithiocarbamate group at a molecular terminal thereof can be obtained. It is believed that the hyperbranched polymer having a dithiocarbamate group at a molecular terminal thereof is produced as follows. That is, by irradiating a light to the compound of Formula (6), an A,-S bond is cleaved and a radical species (Formula (18)) is generated. Next, the radical species of Formula (18) is reacted with the compound of Formula (6) to produce the compound of Formula (19). Further, in the compound of Formula (19), a C-S bond or an A₁-S bond is cleaved to generate a radical species and the radical species is reacted with the compound of Formula (6) to give a compound of Formula (20) or (22). In Formula (20) or (21), DC represents a dithiocarbamate group (-SC(=S)N(R₂)R₃). And it is believed that by repeating the same reaction from the compound of Formula (20) or (21), a hyperbranched polymer having a dithiocarbamate group at a molecular terminal thereof is produced.

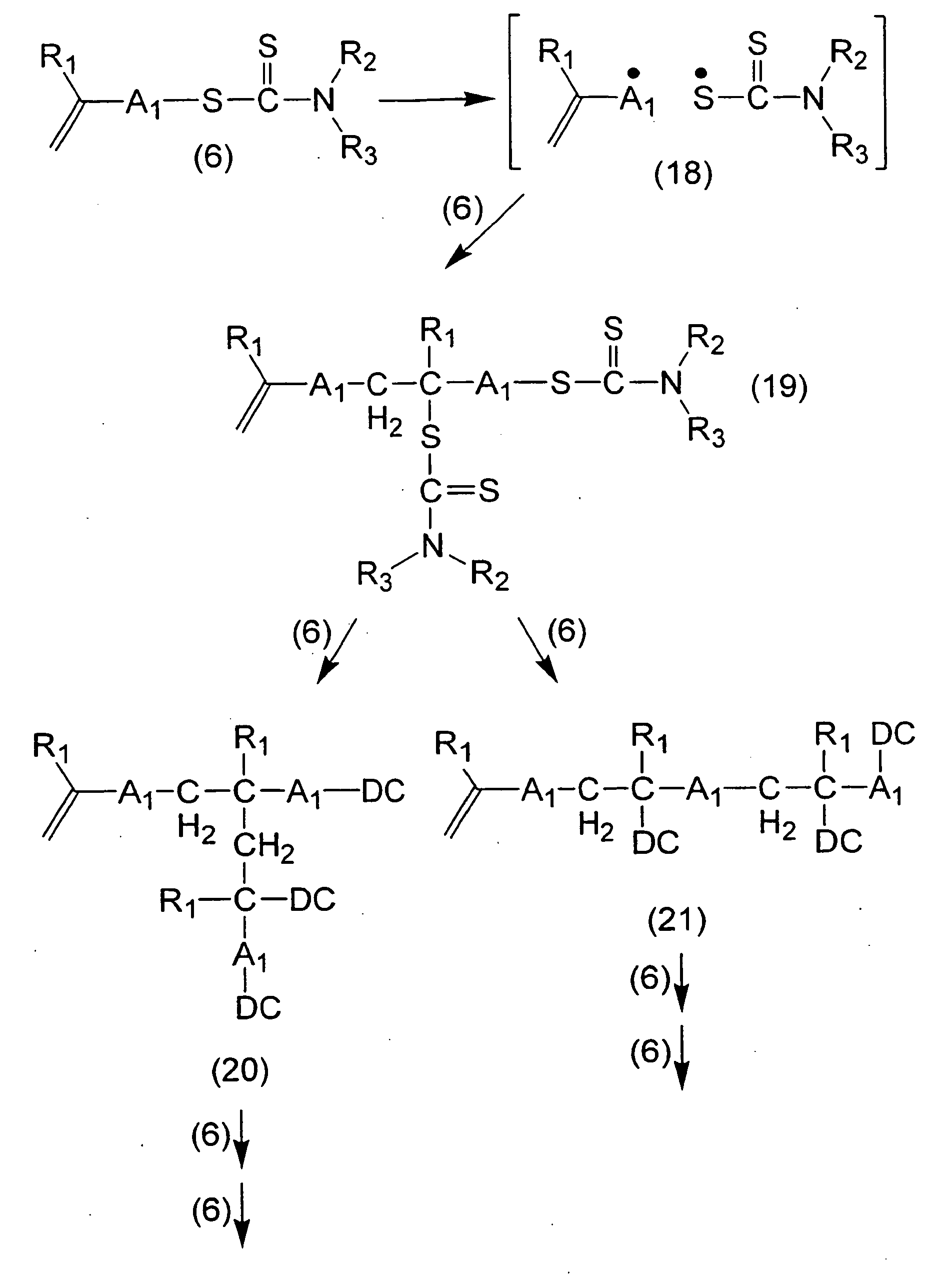

During the living-radical polymerization, for controlling the molecular weight or the molecular weight distribution, a chain transfer agent such as mercaptans or sulfides or a sulfide compound such as tetraethylthiuram disulfide can be used. Further, if desired, an antioxidant such as hindered phenols, an ultra violet (UV) absorber such as benzotriazoles and a polymerization inhibitor such as 4-tert-butylcatechole, hydroquinone, nitrophenol, nitrocresol, picric acid, phenothiazine and dithiobenzoyl disulfide, can be used.
Further, during the living-radical polymerization, for controlling an extent of branching or a degree of polymerization, a known vinyl monomer having no dithiocarbamate group or a compound having a unsaturated double bond can be added. These compounds can be used in a ratio of less than 50 mol % relative to the compound of Formula (6). Specific examples of these compounds include styrenes, vinylbiphenyls, vinylnaphtalenes, vinylanthracenes, acrylic esters, methacrylic esters, acrylamides, methacrylamides, vinylpyrrolidones, acrylonitriles, maleic acids, maleimides, divinyl compounds and trivinyl compounds.

Next, the hyperbranched polymer having a hydrogen atom at a molecular terminal thereof is described in detail.
By reducing the hyperbranched polymer having a dithiocarbamate group at a molecular terminal thereof obtained as described above, that is by converting a dithiocarbamate group to a hydrogen atom, from the hyperbranched polymer having a structure represented by Formula (1) according to the present invention, a hyperbranched polymer having a hydrogen atom at a molecular terminal thereof represented by Formula (22): 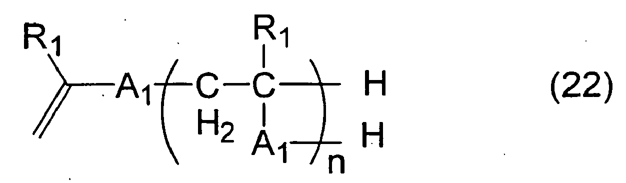 can be obtained.
The reducing method is not particularly limited so long as the method is a method capable of converting a dithiocarbamate group to a hydrogen atom.
The reducing reaction can be performed using a known reducing agent, such as hydrogen, hydrogen iodide, hydrogen sulfide, lithium aluminum hydride, sodium boron hydride, tributyltin hydride, tris(trimethylsilyl) silane and thioglycolic acid. The amount of the reducing agent may be, relative to the number of dithiocarbamate groups in the hyperbranched polymer 1 to 20 times molar equivalent, or 1.5 to 15 times molar equivalent, or 2 to 10 times molar equivalent, or 3 to 5 times molar equivalent. The conditions for the reducing reaction are appropriately selected from reaction times of 0.01 to 100 hours and from reaction temperatures of 0 to 200°C.
Preferably, the reaction time is 0.1 to 10 hours and the reaction temperature is 20 to 100°C.
The reduction is preferably performed in water or an organic solvent. The solvent used is preferably a solvent capable of dissolving the hyperbranched polymer having a dithiocarbamate group and a reducing agent. It is preferred that when the solvent used is the same solvent as that used during the production of the hyperbranched polymer having a dithiocarbamate group, the reaction operation becomes simple.

As a reducing method, preferred is a reducing reaction performed in an organic solvent solution by using as a reducing agent, a compound used in a reduction under a radical reaction condition such as tributyltin hydride and by irradiating a light. Examples of the organic solvent include aromatic hydrocarbons, such as benzene, toluene, xylene and ethylbenzene; ether compounds, such as tetrahydrofuran and diethyl ether; ketone compounds, such as acetone, methyl ethyl ketone, methyl isobutyl ketone and cyclohexanone; and aliphatic hydrocarbons, such as n-heptane, n-hexane and cyclohexane. These solvents may be used individually or in combination of two or more types thereof. The light irradiation can be performed by irradiating from the inside or outside of the reaction system using an UV irradiating lamp, such as a low-pressure mercury lamp, a high-pressure mercury lamp, an ultra high-pressure mercury lamp and a xenone lamp. In the reducing reaction, a reducing agent, such as tributyltin hydride is used preferably in an amount of 1 to 10 times molar equivalent, or 1.5 to 5 times molar equivalent, or 2 to 4 times molar equivalent relative to the number of dithiocarbamate groups in the hyperbranched polymer. Also, an organic solvent is used preferably in an amount of 0.2 to 1000 times mass, or 1 to 500 times mass, or 5 to 100 times mass, or 10 to 50 times mass relative to the mass of the hyperbranched polymer having a dithiocarbamate group at a molecular terminal thereof. Further, in the reducing reaction, it is necessary that before the initiation of the reaction, oxygen in the reaction system is fully purged and the purge of the reaction system is preferably performed using an inert gas, such as nitrogen and argon. The reaction conditions are appropriately selected from reaction times of 0.01 to 100 hours and from reaction temperatures of 0 to 200°C. Preferably, the reaction time is 0.1 to 2 hours and the reaction temperature is 20 to 60°C.
The hyperbranched polymer of the present invention obtained by the reduction as described above can be separated from the solvent in the reaction mixture by distilling-off the solvent or by solid-liquid separation. Also, by introducing the reaction mixture into a poor solvent, the hyperbranched polymer of the present invention can be precipitated to be recovered as a powder.
In the hyperbranched polymer having a dithiocarbamate group at a molecular terminal thereof of the present invention, a part of molecular terminals may remain being a dithiocarbamate group.

Next, the hyperbranched polymer having a thiol group at a molecular terminal thereof is described in detail.
By treating the hyperbranched polymer having a dithiocarbamate group at a molecular terminal thereof with a thiolation converting agent, that is, by converting the dithiocarbamate group to a thiol group, a hyperbranched polymer having a thiol group at a molecular terminal thereof represented by Formula (23): 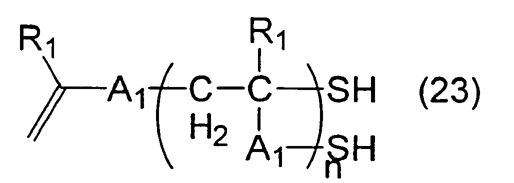 can be obtained.
The reaction method is not particularly limited so long as the method is a method capable of converting the dithiocarbamate group to a thiol group.
Specifically, using a thiolation converting agent, such as hydrazine, benzyl hydrazine, ammonia, metallic sodium, sodium hydroxide, potassium hydroxide, lithium aluminum hydride, sodium boron hydride, hydrogen bromide, hydrochloric acid, trifluoroacetic acid and diacetyl mercury, a thiolation rection can be performed. The amount thereof may be 1 to 200 times molar equivalent, or 2 to 100 times molar equivalent, or 2.5 to 80 times molar equivalent, or 3 to 50 times molar equivalent relative to the number of dithiocarbamate groups in the hyperbranched polymer. The conditions for the thiolation reaction are appropriately selected from reaction times of 0.01 to 100 hours and from reaction temperatures of 0 to 200°C. Preferably, the reaction time is 1 to 80 hours and the reaction temperature is 20 to 150°C.
The thiolation reaction is preferably performed in water or an organic solvent. The solvent used is preferably a solvent capable of dissolving the above hyperbranched polymer having a dithiocarbamate group and the thiolation converting agent. Further, it is preferred that when the solvent used is the same solvent as that used during the production of the hyperbranched polymer having a dithiocarbamate group, the reaction operation becomes simple.

As a method of the thiolation reaction, a reaction performed by a reflux while heating using a compound, such as hydrazine in an organic solvent is preferred. Examples of the organic solvent include aromatic hydrocarbons, such as benzene, toluene, xylene and ethylbenzene; ether compounds, such as tetrahydrofuran, 1,4-dioxane, and diethyl ether; ketone compounds, such as acetone, methyl ethyl ketone, methyl isobutyl ketone and cyclohexanone; and aliphatic hydrocarbons, such as n-heptane, n-hexane and cyclohexane. These solvents may be used individually or in combination of two or more types thereof. Further, the organic solvent is preferably used in an amount of 0.2 to 1000 times mass, or 1 to 500 times mass, or 5 to 100 times mass, or 10 to 50 times mass, relative to the mass of the hyperbranched polymer having a dithiocarbamate group at a molecular terminal thereof. Further, in this reaction, it is necessary that before the initiation of the reaction, oxygen in the reaction system is fully purged and the purge of the reaction system is preferably performed using an inert gas, such as nitrogen and argon.
The hyperbranched polymer of the present invention obtained by the thiolation reaction as described above can be separated from the solvent in the reaction mixture by distilling-off the solvent or by solid-liquid separation. Also, by introducing the reaction mixture into a poor solvent, the hyperbranched polymer of the present invention can be precipitated to be recovered as a powder.
In the hyperbranched polymer having a thiol group at a molecular terminal thereof of the present invention, a part of molecular terminals may remain being a dithiocarbamate group.
Further, according to the present invention, a thin film of the hyperbranched polymer represented by the above Formula (22) or Formula (23) can be obtained. As a production method of the thin film, there can be mentioned a method for thinning a solution in which the hyperbranched polymer is dissolved in a solvent capable of dissolving the hyperbranched polymer at a concentration of 0.1 to 70 % by mass, by an usual method, such as an impregnation method, a brush coating method, a casting method and a spin coating method. Particularly, by a spin coating method, a thin film having a large area can be produced easily, with low cost and in a short time, so that the method has high economical efficiency.
Hereinafter, the present invention is described in more detail referring to examples which should not be construed as limiting the scope of the present invention.

### Examples

In the following examples, for each measurement of physical properties of a sample, the following apparatuses were used.
Liquid Chromatography:
   Apparatus: manufactured by Agilent; trade name: 1100 Series
   Column: Inertsil ODS-2
   Column temp.: 40°C
   Solvent: Acetonitrile/water =60/40 (volume ratio)
   Detector: RI
Gel Permeation Chromatography:
   Apparatus: manufactured by Shimadzu Corporation; trade name: SCL-10AVP
   Column: Shodex KF-804L+KF-803L
   Column temp.: 40°C
   Solvent: Tetrahydrofuran
   Detector: RI
¹H-NMR Spectrum
   Apparatus: manufactured by JEOL DATUM LTD.; trade name: JNM-LA400
   Solvent: CDCl₃
   Internal standard: tetramethylsilane
Element Analysis (carbon, hydrogen, nitrogen)
   Apparatus: manufactured by Perkin Elmer, Inc.; trade name: PE2400II
   Combustion tube temp.: 975°C
Element Analysis (sulfur)
   Apparatus: manufactured by ThermoFinnigan Ltd.; trade name: Flash EA1112
   Combustion tube temp.: 1000°C
Thermogravimetric Analysis
   Apparatus: manufactured by Seiko Instruments Inc.; trade name: TG/DTA320
   Temp. elevation rate: 10°C/min
   Air supply: 300 mL/min
AFM Measurement
   Apparatus: manufactured by Veeco Instruments Inc.; trade name: Dimension 3100
   Probe material: single crystal silicone
   Measurement mode: Tapping mode

### Reference Example 1

### <Synthesis of N,N-diethyldithiocarbamylmethylstyrene>

Into a 2L reaction flask, 120 g of chloromethylstyrene (manufactured by Seimi Chemical Co., Ltd.; trade name: CMS-14), 181 g of Sodium N,N-diethyldithiocarbamidate trihydrate (manufactured by Kanto Chemical Co., Inc.) and 1400 g of acetone were charged and while stirring the resultant mixture, a reaction was performed at 40°C for 1 hour. After the completion of the reaction, deposited sodium chloride was filtered to be removed and then, acetone was distilled off from the reaction mixture using an evaporator to thereby obtain a reaction crude powder. The obtained reaction crude powder was redissolved in toluene and the resultant liquid was separated into toluene / water. Thereafter, in a refrigerator having a temperature of -20°C, an objective was recrystallized from the toluene phase. The recrystallized substance was filtered and vacuum-dried to thereby obtain 206 g (yield; 97%) of an objective in the form of a white powder. The purity (area percentage) thereof was 100% as measured by a liquid chromatography. The melting point thereof was 56°C as measured by a DSC measurement.

### Reference Example 2

### <Synthesis of Styrene-based Hyperbranched Polymer Having Dithiocarbamate Group at Molecular terminal Thereof>

Into a 300-ml reaction flask, 108 g of N,N-diethyldithiocarbamylmethylstyrene and 72 g of toluene were charged and the resultant mixture was stirred to prepare a light yellow transparent solution, followed by purging the inside of the reaction system with nitrogen. From the center of the solution, a high pressure mercury lamp of 100 W (manufactured by Sen Lights Co., Ltd. trade name: HL-100) was lighted to perform a photopolymerization reaction by an internal irradiation while stirring the reaction mixture at room temperature for 12 hours. Next, the reaction mixture was charged into 3000 g of methanol to reprecipitate a polymer in a massive state having high viscosity and then a supernatant liquid was removed by a decantation. Further, the polymer was redissolved in 300 g of tetrahydrofuran and the resultant solution was charged into 3000 g of methanol to reprecipitate the polymer in a slurry state. The slurry was filtered and vacuum-dried to thereby obtain 48 g of an objective in the form of a white powder. The weight average molecular weight Mw and the degree of dispersion Mw/Mn of the polymer were measured by a gel permeation chromatography (in a converted molecular weight as polystyrene) and found to be respectively 20,900 and 4.9. The results of the element analysis were carbon: 64.6%, hydrogen: 7.4%, nitrogen: 5.0% and sulfur: 25.3%. By a thermogravimetric analysis, it was found that the temperature at which the weight of the polymer was reduced by 5% was 248°C.

Further, a 2% by mass cyclohexanone solution of the obtained objective was prepared and filtered using a microfilter made of polytetrafluoroethylene having a pore size of 0.2 µm. The resultant solution was coated to a silicone wafer by a spin coating method and the wafer was then heated on a hot plate at 150°C for 3 minutes to thereby obtain a thin film having a film thickness of 44 nm. A surface state of the obtained thin film was observed by an AFM measurement. It was observed that in the surface of the thin film, a large number of particles having a particle diameter of around 10 nm are scattered and the thin film had a surface roughness of 0.36 nm.

### Example 1

### <Reduction Removal of Dithiocarbamate Group>

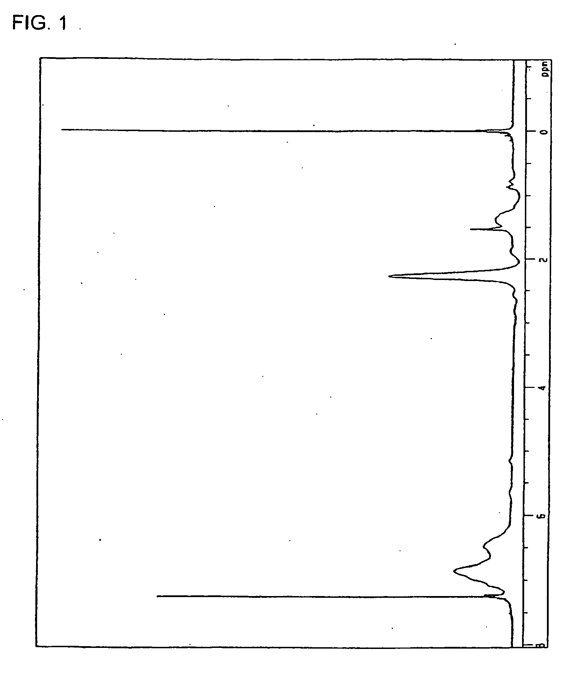

Into a 300 mL reaction flask, 14 g of the hyperbranched polymer having a dithiocarbamate group at a molecular terminal thereof obtained in Second Reference, 28 g of tributyltin hydride (manufactured by Sigma-Aldrich Corp.) and 140 g of toluene were charged and the resultant mixture was stirred to prepare a colorless transparent solution, followed by purging the inside of the reaction system with nitrogen. From the center of the solution, a high pressure mercury lamp of 100 W (manufactured by Sen Lights Co., Ltd. trade name: HL-100) was lighted to perform a reaction by an internal irradiation while stirring the reaction mixture at room temperature for 15 minutes. Next, the reaction mixture was diluted by adding 500 g of toluene thereto and the diluted mixture was charged into 3600 g of methanol to thereby reprecipitate a hyperbranched polymer in a slurry state. The slurry was filtered and vacuum-dried to thereby obtain 5.3 g of a white powder-shaped hyperbranched polymer in which a dithiocarbamate group was replaced by a hydrogen atom. The weight average molecular weight Mw and the degree of dispersion Mw/Mn of the polymer were measured by a gel permeation chromatography (in a converted molecular weight as polystyrene) and found to be respectively 38,900 and 4.8. The results of the element analysis were carbon: 89.4%, hydrogen: 8.8%, nitrogen: less than 0.5% and sulfur: less than 0.5%. By a thermogravimetric analysis, it was found that the temperature at which the weight of the polymer was reduced by 5% was 338°C. The measured result of ¹H-NMR is shown in FIG. 1. As shown in FIG. 1, the obtained hyperbranched polymer has a structure represented by Formula (24):

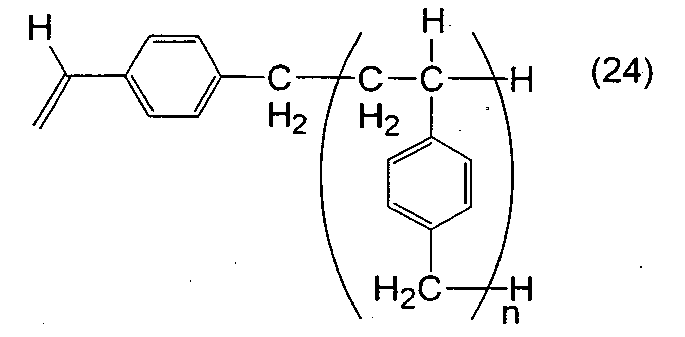

Further, a 2% by mass cyclohexanone solution of the obtained objective was prepared and filtered using a microfilter made of polytetrafluoroethylene having a pore size of 0.2 µm. The resultant solution was coated onto a silicon wafer by a spin coating method and the wafer was then heated on a hot plate at 150°C for 3 minutes to thereby obtain a thin film having a film thickness of 42 nm. A surface state of the obtained thin film was observed by an AFM measurement. It was observed that in the surface of the thin film, there was no particle having a particle diameter of around 10 nm as observed in the second reference and the surface state was a homogeneous surface having a surface roughness of 0.28 nm.

### Reference Example 3

### <Synthesis of N,N-diethyldithiocarbamylethylmethacrylate>

Into a 2L reaction flask, 100 g of chloroethylmethacrylate (manufactured by Lancaster Co., Ltd.), 178 g of Sodium N,N-diethyldithiocarbamidate trihydrate (manufactured by Kanto Chemical Co., Inc.) and 1100 g of acetone were charged and while stirring the resultant mixture, a reaction was performed at 40°C for 14 hours. After the completion of the reaction, deposited sodium chloride was filtered to be removed and then, acetone was distilled off from the reaction mixture using an evaporator to thereby obtain a reaction crude powder. The obtained reaction crude powder was redissolved in 1,2-dichloroethane and the resultant liquid was separated into 1,2-dichloroethane / water. Thereafter, 1,2-dichloroethane was distilled off from the 1,2-dichloroethane phase to thereby obtain 171 g (yield; 97%) of an objective in the form of a yellow liquid. The purity (area percentage) thereof was 96% as measured by a liquid chromatography.

### Reference Example 4

### <Synthesis of Acrylic Hyperbranched Polymer Having Dithiocarbamate Group at Molecular terminal Thereof>

Into a 300-ml reaction flask, 90 g of N,N-diethyldithiocarbamylethylmethacrylate and 90 g of toluene were charged and the resultant mixture was stirred to prepare a light yellow transparent solution, followed by purging the inside of the reaction system with nitrogen. From the center of the solution, a high pressure mercury lamp of 100 W (manufactured by Sen Lights Co., Ltd. trade name: HL-100) was lighted to perform a photopolymerization reaction by an internal irradiation while stirring the reaction mixture at room temperature for 5 hours. Next, the reaction mixture was charged into 3000 g of methanol to reprecipitate a polymer in a massive state having high viscosity and then a supernatant liquid was removed by a decantation. Further, the polymer was redissolved in 400 g of tetrahydrofuran and the resultant solution was charged into 5000 g of methanol to reprecipitate the polymer in a slurry state. The slurry was filtered and vacuum-dried to thereby obtain 44 g of an objective in the form of a white powder. The weight average molecular weight Mw and the degree of dispersion Mw/Mn of the polymer were measured by a gel permeation chromatography (in a converted molecular weight as polystyrene) and found to be respectively 43,200 and 2.9. The results of the element analysis were carbon: 50.8%, hydrogen: 7.6%, nitrogen: 5.1% and sulfur: 25.6%. By a thermogravimetric analysis, it was found that the temperature at which the weight of the polymer was reduced by 5% was 186°C.

### Example 2

### <Reduction Removal of Dithiocarbamate Group>

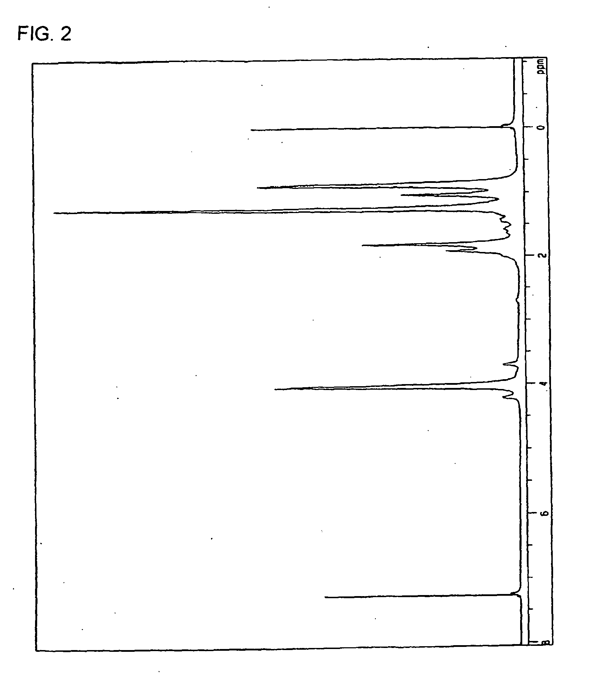

Into a 300 mL reaction flask, 15 g of the hyperbranched polymer having a dithiocarbamate group at a molecular terminal thereof obtained in the fourth reference, 30 g of tributyltin hydride (manufactured by Sigma-Aldrich Corp.) and 135 g of tetrahydrofuran were charged and the resultant mixture was stirred to prepare a light yellow transparent solution, followed by purging the inside of the reaction system with nitrogen. From the center of the solution, a high pressure mercury lamp of 100 W (manufactured by Sen Lights Co., Ltd. trade name: HL-100) was lighted to perform a reaction by an internal irradiation while stirring the reaction mixture at room temperature for 1 hour. Next, the reaction mixture was charged into 2000 g of hexane to thereby reprecipitate a hyperbranched polymer in a slurry state. The slurry was filtered and vacuum-dried to thereby obtain 5.7 g of a white powder-shaped hyperbranched polymer. The weight average molecular weight Mw and the degree of dispersion Mw/Mn of the polymer were measured by a gel permeation chromatography (in a converted molecular weight as polystyrene) and found to be respectively 36,100 and 2.2. The results of the element analysis were carbon: 61.3%, hydrogen: 9.0%, nitrogen: less than 0.5% and sulfur: less than 0.5%. By a thermogravimetric analysis, it was found that the temperature at which the weight of the polymer was reduced by 5% was 308°C. The measured result of ¹H-NMR is shown in FIG. 2. As shown in FIG. 2, the obtained hyperbranched polymer has a structure represented by Formula (25):

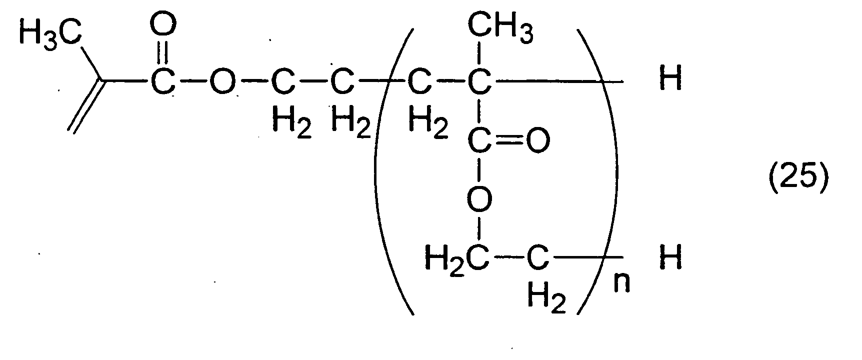

### Example 3

### <Thiolation of Dithiocarbamate Group>

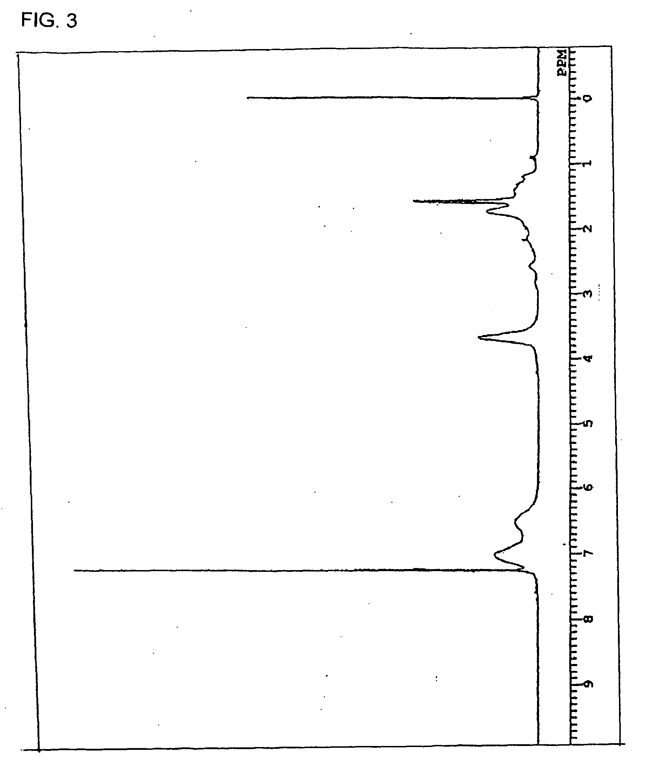

Into an 100 mL reaction flask equipped with a refluxing tower, 5 g of the hyperbranched polymer having a dithiocarbamate group at a molecular terminal thereof obtained in the second reference and 50 g of 1,4-dioxane were charged and the resultant mixture was stirred to prepare a colorless transparent solution, followed by adding 50 g of hydrazine monohydrate (manufactured by Kanto Chemical Co., Inc.) to the solution and by purging the inside of the reaction system with nitrogen. The solution was refluxed for 3 days and the solution was cooled to room temperature. From the solution which was separated into two layers, the lower layer was removed and the organic layer was washed by adding a saturated salt solution thereto, followed by drying the organic layer by adding magnesium sulfate anhydrate thereto. The solution of the organic layer was concentrated and 5 g of chloroform was added thereto, followed by dropping the solution into 50 g of n-hexane to reprecipitate. The resultant reprecipitated colorless powder was dried to obtain 2.5 g of a hyperbranched polymer in which a dithiocarbamate group was replaced by a thiol group. The weight average molecular weight Mw of the polymer was measured by a gel permeation chromatography (in a converted molecular weight as polystyrene) and found to be 16,900. The results of the element analysis were carbon: 73.2%, hydrogen: 6.9%, sulfur: 18.6% and nitrogen: less than 1.0%. The measured result of ¹H-NMR is shown in FIG. 3. As shown in FIG. 3, the obtained hyperbranched polymer has a structure represented by Formula (26):

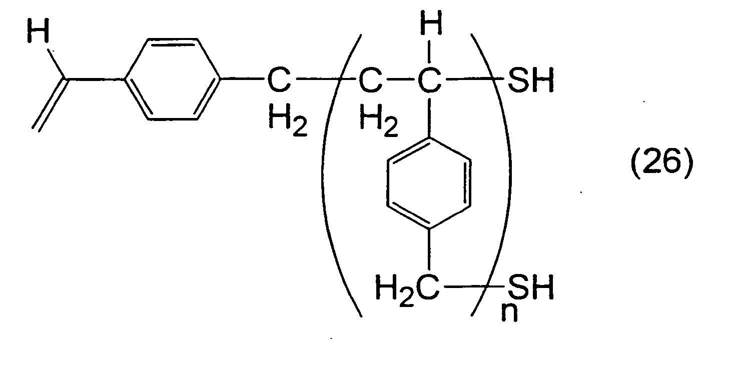

As is apparent from the comparison of the results of the thermal gravimetric analysis in the second reference and in the first example and the results in the fourth reference and in the second example, a hyperbranched polymer in which at a molecular terminal thereof, a dithiocarbamate group was replaced by a hydrogen atom, has a high temperature at which the weight reduction by 5% is caused, so that such a polymer was thermally stable.

Further, as is apparent from the comparison of the thin film produced in the second reference and the first example, by replacing the dithiocarbamate group with a hydrogen atom at a molecular terminal of the polymer, there are not a large number of particles in the thin film surface, so that the thin film is homogeneous and excellent in thin film properties.

### Industrial Applicability

The hyperbranched polymer according to the present invention is thermally stable and can be utilized as painting materials, adhesive materials, resin filler, various forming materials, nanometer pore forming agent, resist materials, electronic materials, printing materials, battery materials and medical materials.

### Brief Description of Drawings

[FIG. 1] FIG. 1 is a ¹H-NMR spectrum of a hyperbranched polymer obtained in a first example.
[FIG. 2] FIG. 2 is a ¹H-NMR spectrum of a hyperbranched polymer obtained in a second example.
[FIG. 3] FIG. 3 is a ¹H-NMR spectrum of a hyperbranched polymer obtained in a third example.

## Claims

1. A hyperbranched polymer represented by Formula (1): 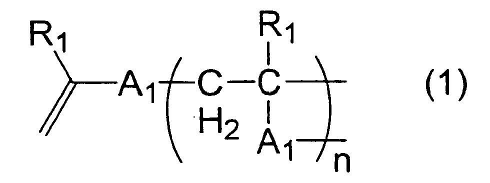 wherein R₁ represents a hydrogen atom or a methyl group; A₁ represents Formula (2) or Formula (3): 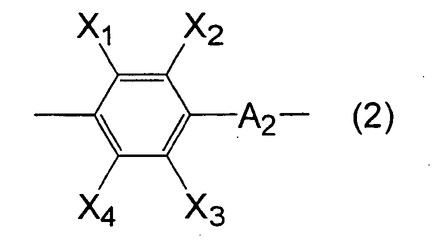 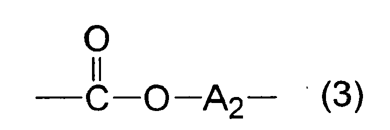 wherein A₂ represents a linear, branched or cyclic alkylene group having 1 to 30 carbon atoms, which may contain an ether bond or an ester bond; X₁, X₂, X₃ and X₄ individually represent a hydrogen atom, an alkyl group having 1 to 20 carbon atoms, an alkoxy group having 1 to 20 carbon atoms, a halogen group, a nitro group, a hydroxyl group, an amino group, a carboxyl group or a cyano group; and n is the number of repeating units which is an integer of 2 to 100000,
and having a hydrogen atom or a thiol group at a molecular terminal thereof.

2. The hyperbranched polymer according to claim 1, wherein the A₁ is a structure represented by Formula (4):

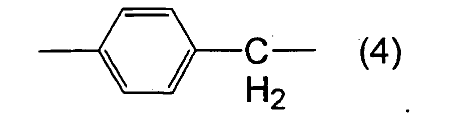

3. The hyperbranched polymer according claim 1, wherein the A₁ is a structure represented by Formula (5): 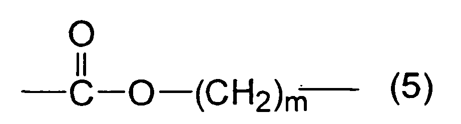 wherein m represents an integer of 2 to 10.

4. The hyperbranched polymer according to claim 1, wherein a weight average molecular weight is 500 to 5000000, as measured by a gel permeation chromatography in a converted molecular weight as polystyrene.

5. A method of producing the hyperbranched polymer having a hydrogen atom at a molecular terminal thereof according to claim 1 comprising:
living-radical polymerizing a dithiocarbamate compound represented by Formula (6): 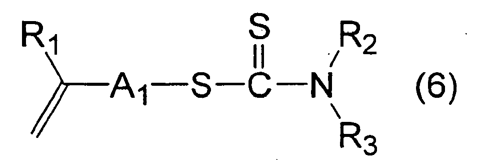 wherein R₁ and A₁ represent the same as defined above in Formula (1); R₂ and R₃ individually represent an alkyl group having 1 to 5 carbon atoms, a hydroxyalkyl group having 1 to 5 carbon atoms or an aryl alkyl group having 7 to 12 carbon atoms; and R₂ and R₃ may be bonded to each other to form a ring together with a nitrogen atom, to obtain a hyperbranched polymer having a dithiocarbamate group at a molecular terminal thereof; and
reducing the hyperbranched polymer.

6. The method according to claim 5, wherein the dithiocarbamate compound is N,N-diethyldithiocarbamylmethylstyrene or N,N-diethyldithiocarbamylethylmethacrylate.

7. The method according to claim 5, wherein the reduction is performed by irradiating a light in the presence of tributyltin hydride.

8. The method according to claim 5, wherein the reduction is performed by irradiating a light in the presence of tributyltin hydride in an organic solvent solution containing the hyperbranched polymer having a dithiocarbamate group at a molecular terminal thereof.

9. A method of producing the hyperbranched polymer having a thiol group at a molecular terminal thereof according to claim 1 comprising:
living-radical polymerizing the dithiocarbamate compound represented by Formula (6) to obtain a hyperbranched polymer having a dithiocarbamate group at a molecular terminal thereof; and
reacting the hyperbranched polymer having a dithiocarbamate group at a molecular terminal thereof with a thiolation converting agent.

10. The method according to claim 9, wherein the dithiocarbamate compound is N,N-diethyldithiocarbamylmethylstyrene or N,N-diethyldithiocarbamylethylmethacrylate.

11. The method according to claim 9 comprising:
reacting a hyperbranched polymer having a dithiocarbamate group at a molecular terminal thereof in an organic solvent solution containing the same with a thiolation converting agent.

12. The method according to claim 9, wherein as the thiolation converting agent, used is at least one selected from hydrazine, benzyl hydrazine, ammonia, sodium metal, sodium hydroxide, potassium hydroxide, lithium aluminum hydride, sodium boron hydride, hydrogen bromide, hydrochloric acid, trifluoroacetic acid and mercury diacetylate.

13. A thin film composed of the hyperbranched polymer according to claim 1.

## Patentansprüche

1. Hyperverzweigtes Polymer der Formel (1): 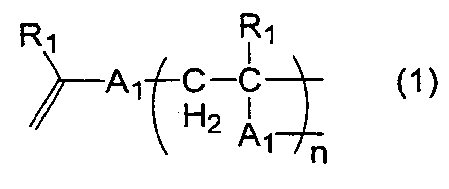 worin R₁ ein Wasserstoffatom oder eine Methylgruppe darstellt; A₁ Formel (2) oder Formel (3) darstellt: 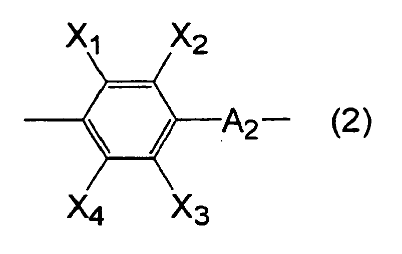 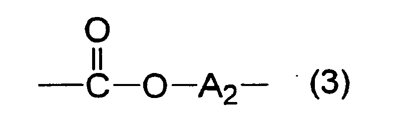 worin A₂ eine lineare, verzweigte oder cyclische Alkylengruppe mit 1 bis 30 Kohlenstoffatomen darstellt, welche eine Etherbindung oder eine Esterbindung enthalten kann; X₁, X₂, X₃ und X₄ jeweils einzeln ein Wasserstoffatom, eine Alkylgruppe mit 1 bis 20 Kohlenstoffatomen, eine Alkoxygruppe mit 1 bis 20 Kohlenstoffatomen, eine Halogengruppe, eine Nitrogruppe, eine Hydroxylgruppe, eine Aminogruppe, eine Carboxylgruppe oder eine Cyanogruppe darstellen;
und n die Anzahl der wiederkehrenden Einheiten angibt, welche eine ganze Zahl von 2 bis 100.000 ist,
mit einem Wasserstoffatom oder einer Thiolgruppe an einem Molekülende davon.

2. Hyperverzweigtes Polymer gemäss Anspruch 1, worin A₁ eine Struktur der Formel (4) ist:

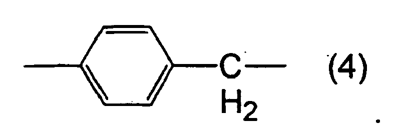

3. Hyperverzweigtes Polymer gemäss Anspruch 1, worin A₁ eine Struktur der Formel (5) ist: 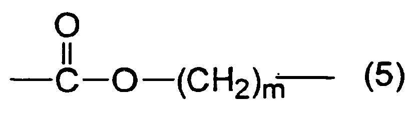 worin m eine ganze Zahl von 2 bis 10 ist.

4. Hyperverzweigtes Polymer gemäss Anspruch 1, wobei das durch Gelpermeationschromatografie bestimmte und auf Polystyrol bezogene gewichtsgemittelte Molekulargewicht 500 bis 5.000.000 beträgt.

5. Verfahren zur Herstellung eines hyperverzweigten Polymers mit einem Wasserstoffatom an einem Molekülende davon gemäss Anspruch 1, umfassend:
lebende radikalische Polymerisation einer Dithiocarbamatverbindung der Formel (6): 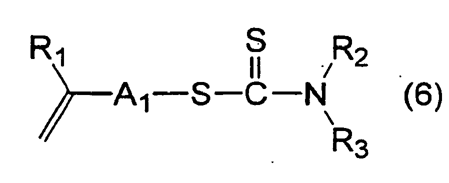 worin R₁ und A₁ das gleiche darstellen wie oben in Formel (1) definiert; R₂ und R₃ jeweils einzeln eine Alkylgruppe mit 1 bis 5 Kohlenstoffatomen, eine Hydroxyalkylgruppe mit 1 bis 5 Kohlenstoffatomen oder eine Arylalkylgruppe mit 7 bis 12 Kohlenstoffatomen darstellen; und R₂ und R₃ miteinander verbunden sein können, um zusammen mit einem Stickstoffatom einen Ring zu bilden, um ein hyperverzweigtes Polymer mit einer Dithiocarbamatgruppe an einem Molekülende davon zu erhalten; und
Reduktion des hyperverzweigten Polymers.

6. Verfahren gemäss Anspruch 5, worin die Dithiocarbamatverbindung N,N-Diethyldithiocarbamylmethylstyrol oder N,N-Diethyldithiocarbamylethylmethacrylat ist.

7. Verfahren gemäss Anspruch 5, worin die Reduktion durch Lichtbestrahlung in Gegenwart von Tributylzinnhydrid durchgeführt wird.

8. Verfahren gemäss Anspruch 5, worin die Reduktion durch Lichtbestrahlung in Gegenwart von Tributylzinnhydrid in einer Lösung in einem organischen Lösungsmittel, das das hyperverzweigte Polymer mit einer Dithiocarbamatgruppe an einem Molekülende davon enthält, durchgeführt wird.

9. Verfahren zur Herstellung eines hyperverzweigten Polymers mit einer Thiolgruppe an einem Molekülende davon gemäss Anspruch 1, umfassend:
lebende radikalische Polymerisation der Dithiocarbamatverbindung der Formel (6), um ein hyperverzweigtes Polymer mit einer Dithiocarbamatgruppe an einem Molekülende davon zu erhalten; und
Umsetzen des hyperverzweigten Polymers mit einer Dithiocarbamatgruppe an einem Molekülende davon mit einem Thiolierungs-Umwandlungsmittel.

10. Verfahren gemäss Anspruch 9, worin die Dithiocarbamatverbindung N,N-Diethyldithiocarbamylmethylstyrol oder N,N-Diethyldithiocarbamylethylmethacrylat ist.

11. Verfahren gemäss Anspruch 9, umfassend:
Umsetzen eines hyperverzweigten Polymers mit einer Dithiocarbamatgruppe an einem Molekülende davon in einer organischen Lösungsmittellösung, enthaltend dasselbe mit einem Thiolierungs-Umwandlungsmittel.

12. Verfahren gemäss Anspruch 9, worin als Thiolierungs-Umwandlungsmittel mindestens eines, ausgewählt aus Hydrazin, Benzylhydrazin, Ammoniak, Natriummetall, Natriumhydroxid, Kaliumhydroxid, Lithiumaluminiumhydrid, Natriumborhydrid, Wasserstoffbromid, Salzsäure, Trifluoressigsäure und Quecksilberdiacetylat verwendet wird.

13. Dünner Film, zusammengesetzt aus dem hyperverzweigten Polymer gemäss Anspruch 1.

## Revendications

1. Polymère hyperramifié représenté par la Formule (1): 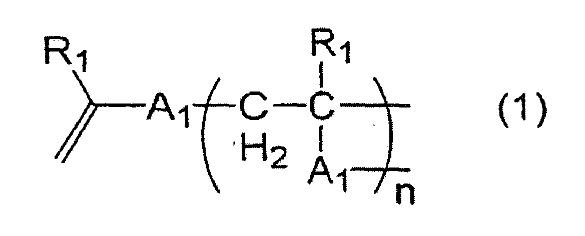 dans laquelle R₁ représente un atome d'hydrogène ou un groupe méthyle ; A₁ représente la Formule (2) ou la Formule (3): 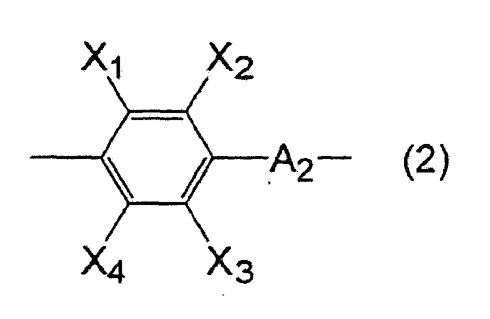 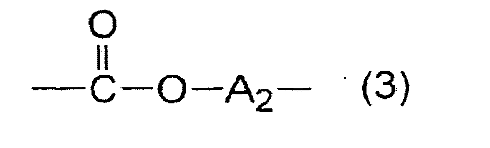 dans lesquelles A₂ représente un groupe alkylène linéaire, ramifié ou cyclique ayant 1 à 30 atomes de carbone, qui peut contenir une liaison éther ou une liaison ester ; X₁, X₂, X₃ et X₄ représentent individuellement un atome d'hydrogène, un groupe alkyle ayant 1 à 20 atomes de carbone, un groupe alcoxy ayant 1 à 20 atomes de carbone, un groupe halogène, un groupe nitro, un groupe hydroxyle, un groupe amino, un groupe carboxyle ou un groupe cyano ; et n est le nombre d'unités récurrentes qui est un entier de 2 à 100 000,
et ayant un atome d'hydrogène ou un groupe thiol au niveau d'une extrémité moléculaire de celui-ci.

2. Polymère hyperramifié selon la revendication 1, dans lequel A₁ est une structure représentée par la Formule (4):

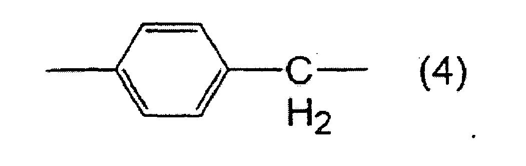

3. Polymère hyperramifié selon la revendication 1, dans lequel A₁ est une structure représentée par la Formule (5): 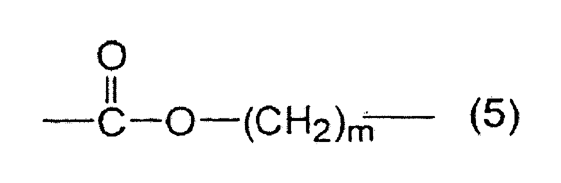 dans laquelle m représente un entier de 2 à 10.

4. Polymère hyperramifié selon la revendication 1, dans lequel un poids moléculaire moyen en poids est 500 à 5 000 000, tel que mesuré par une chromatographie par perméation sur gel dans un poids moléculaire converti comme polystyrène.

5. Procédé de production du polymère hyperramifié ayant un atome d'hydrogène au niveau d'une extrémité moléculaire de celui-ci selon la revendication 1 comprenant:
la polymérisation par radicaux vivants d'un composé dithiocarbamate représenté par la Formule (6): 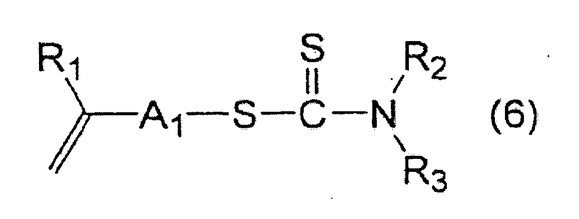 dans laquelle R₁ et A₁ représentent les mêmes que ceux définis ci-dessus dans la Formule (1) ; R₂ et R₃ représentent individuellement un groupe alkyle ayant 1 à 5 atomes de carbone, un groupe hydroxyalkyle ayant 1 à 5 atomes de carbone ou un groupe arylalkyle ayant 7 à 12 atomes de carbone ; et R₂ et R₃ peuvent être liés l'un à l'autre pour former un cycle avec un atome d'azote, pour obtenir un polymère hyperramifié ayant un groupe dithiocarbamate au niveau d'une extrémité moléculaire de celui-ci ; et
la réduction du polymère hyperramifié.

6. Procédé selon la revendication 5, dans lequel le composé dithiocarbamate est le N,N-diéthyldithiocarbamylméthylstyrène ou le méthacrylate de N,N-diéthyldithiocarbamyléthyle.

7. Procédé selon la revendication 5, dans lequel la réduction est effectuée en projetant une lumière en présence d'hydrure de tributylétain.

8. Procédé selon la revendication 5, dans lequel la réduction est effectuée en projetant une lumière en présence d'hydrure de tributylétain dans une solution de solvant organique contenant le polymère hyperramifié ayant un groupe dithiocarbamate au niveau d'une extrémité moléculaire de celui-ci.

9. Procédé de production du polymère hyperramifié ayant un groupe thiol au niveau d'une extrémité moléculaire de celui-ci selon la revendication 1 comprenant:
la polymérisation par radicaux vivants du composé dithiocarbamate représenté par la Formule (6) pour obtenir un polymère hyperramifié ayant un groupe dithiocarbamate au niveau d'une extrémité moléculaire de celui-ci ; et
la réaction du polymère hyperramifié ayant un groupe dithiocarbamate au niveau d'une extrémité moléculaire de celui-ci avec un agent de conversion par thiolation.

10. Procédé selon la revendication 9, dans lequel le composé dithiocarbamate est le N,N-diéthyldithiocarbamylméthylstyrène ou le méthacrylate de N,N-diéthyldithiocarbamyléthyle.

11. Procédé selon la revendication 9 comprenant:
la réaction d'un polymère hyperramifié ayant un groupe dithiocarbamate au niveau d'une extrémité moléculaire de celui-ci dans une solution de solvant organique contenant celui-ci avec un agent de conversion par thiolation.

12. Procédé selon la revendication 9, dans lequel, en tant qu'agent de conversion par thiolation, il est utilisé au moins un choisi parmi l'hydrazine, la benzylhydrazine, l'ammoniac, le sodium métal, l'hydroxyde de sodium, l'hydroxyde de potassium, l'hydrure de lithium et d'aluminium, l'hydrure de sodium et de bore, le bromure d'hydrogène, l'acide chlorhydrique, l'acide trifluoroacétique et le diacétylate de mercure.

13. Film mince composé du polymère hyperramifié selon la revendication 1.
